(19) Europäisches Patentamt
European Patent Office
Office européen des brevets

(11) EP 4 804 085 A1

(12) EUROPEAN PATENT APPLICATION

(43) Date of publication:
**09.09.2026 Bulletin 2026/37**

(21) Application number: **25162429.2**

(22) Date of filing: **07.03.2025**

(51) International Patent Classification (IPC):
***G06N 3/09*** *(2023.01)* ***G06N 5/045*** *(2023.01)*

(52) Cooperative Patent Classification (CPC):
**G06N 5/045; G06N 3/044; G06N 3/045; G06N 3/0455; G06N 3/0464; G06N 3/047; G06N 3/0475; G06N 3/048; G06N 3/08; G06N 3/084; G06N 3/088; G06N 3/09; G06N 5/01; G06N 7/01; G06N 20/00;** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Ludwig-Maximilians-Universität München, in Vertretung des Freistaates Bayern 80539 München (DE)**
- **Technische Universität Berlin, Körperschaft des öffentlichen Rechts 10623 Berlin (DE)**
- **Freie Universität Berlin 14195 Berlin (DE)**
- **Universität Duisburg-Essen (Körperschaft des Öffentlichen Rechts) 45141 Essen (DE)**

(72) Inventors:
- **Keyl, Philipp 80337 München (DE)**
- **Montavon, Grégoire 10587 Berlin (DE)**
- **Keyl, Julius 45131 Essen (DE)**
- **Kleesiek, Jens 45131 Essen (DE)**
- **Müller, Klaus-Robert 10587 Berlin (DE)**
- **Klauschen, Frederick 80337 München (DE)**

(74) Representative: **Pearl Cohen EU Nibelungenstraße 84 80639 München (DE)**

# (54) METHOD FOR DETERMINING A CONTRIBUTION OF A FEATURE COMBINATION TO AN OUTPUT OF A MACHINE LEARNING MODEL

(57) A computer-implemented method, wherein the method determining a contribution of, optionally pairwise or higher-order, combinations of features between at least two application feature sets to an application output of a trained machine learning model, each combination of features comprising at least one feature of a first application feature set and at least one feature of a second application feature set.

101
102
103
100
Contributions of interactions between feature sets x and y
1031
1
1021
1022
1022'
1023'
Φ
Ψ
3
2
21
21'
Shared latent space
3'
2'
1023
1024
Transformation g
22
Explaining Transformation g
Output of interest s
1024'
22'
Fig. 1



Processed by Luminess, 75001 PARIS (FR)

(Cont. next page)

(52) Cooperative Patent Classification (CPC): (Cont.)
**G06N 20/10; G06N 20/20**

## Description

The present disclosure is directed to a computer-implemented method for determining a contribution of a feature combination to an output of a machine learning model, a data processing device configured to carry out the method, and a computer program as well as a computer readable (storage) medium comprising instructions for implementing the method on a computer.

The present disclosure broadly relates to the technical field of explainable artificial intelligence or explainable machine learning, especially for the use in life sciences and/or other medical fields.

Keyl et al. (Keyl, J., Keyl, P., Montavon, G. et al. Decoding pan-cancer treatment outcomes using multimodal real-world data and explainable artificial intelligence. Nat Cancer (2025). https://doi.org/10.1038/s43018-024-00891-1) is directed to an explainable artificial intelligence (xAI) approach to enhance clinical decision-making in oncology. That is, Keyl et al. describe an interpretable neural network model that evaluates prognostic factors across 38 solid tumor types. More specifically, a neural network was trained on multimodal real-world data from 15,726 patients, incorporating 350 clinical markers, including electronic health records, image-derived body compositions, and mutational tumor profiles. xAI methods were applied to quantify the prognostic contribution of each marker at the patient level, revealing 114 key markers that accounted for 90% of the model's decision-making process. By leveraging xAI, Keyl et al. provide insights into how neural networks assess complex clinical data, demonstrating their potential to support precision oncology.

It is an object of the present disclosure to provide a method and/or a device suitable to enrich the prior art.

This object is solved by the independent claims. The dependent claims are directed to optional further developments of the disclosure.

A computer-implemented method is provided. The method comprises a prediction step and an explanation step. The prediction step comprises providing an application data sample comprising at least two application feature sets as input to a trained machine learning model. The prediction step comprises mapping of the at least two application feature sets into a shared latent space using the trained machine learning model thereby generating a first latent application vector for the first application feature set and a second latent prediction vector for the second application feature set. The shared latent space has a first predefined dimensionality. The prediction step comprises generating a further latent application vector using the trained machine learning model based on the first and the second latent application vectors. The prediction step comprises mapping the further latent application vector onto an output vector space using the trained machine learning model thereby generating an application output. The output vector space has a second predefined dimensionality. The explanation step comprises determining a contribution of, optionally pairwise or higher-order, combinations of features between the at least two application feature sets to the application output of the trained machine learning model, each combination of features comprising at least one feature of the first application feature set and at least one feature of the second application feature set.

An artificial intelligence (AI) driven machine can be provided. The machine can be configured to model an output or outcome of interest and to identify features and feature combinations that determine the outcome.

The machine can be applicable to any data structure when an outcome of interest depends on at least two sets of features. At least a fraction of features can be different between the feature sets.

The machine can receive data samples that are structured into a number of (optionally disjunct) feature sets.

Machine learning algorithms, such as artificial neural networks, can be used to integrate these feature sets and to model the outcome of interest.

Explainable artificial intelligence (xAI) techniques can be used to estimate the contribution of pairs or higher-order combinations of features across different feature sets for the outcome of interest.

By identifying features that contribute to an interaction, or more specifically by identifying how an interaction of features can have an effect on an outcome, the disclosure can fulfill an important purpose for medical research and other fields.

In one optional implementation, the disclosure may be used for modeling of interactions between patient characteristics and treatment information, e.g. to identify drug-patient interactions that determine intended and/or adverse treatment outcomes. This approach can allow to compute how different treatment characteristics (e.g. atoms in a drug molecule, chemical properties of an antibody, subsequent steps in a treatment plan) interact with certain patient characteristics (e.g. features describing the general condition, molecular features of the tumor that cause drug resistance) to influence the outcome of interest.

In another optional implementation, additionally, or alternatively, the disclosure may be used for modeling of interactions between compounds and compound targets such as cells, viruses, or receptors. As an outcome, the disclosure can model the effect of perturbation, e.g. cell viability, percentage of destroyed particles, gene expression, or binding affinity between the compound and a target protein or receptor. The disclosure can serve to identify compound characteristics and properties of the compound target (e.g. cell protein or RNA expression, virus RNA or DNA sequence, receptor 3D structure) that together contribute towards higher or lower outcome of interest.

The method can comprise a training phase/step for generating the trained machine learning model. The training

phase can comprise providing training data samples, each data sample comprising at least two training feature sets and a training target output. The feature sets can be provided as input for the untrained machine learning model. The feature sets used during the training phase can comprise identical or similar information as feature sets used in the application phase, i.e. application feature sets and the training feature sets comprising information describing the same features. In other words, there can be multiple data samples used for training of the model, wherein an outcome of interest is associated with every one of these data samples. There can be multiple other data samples used for application of the model. All data samples may be matched to the same feature sets, i.e., the feature sets of the training and the application phase may have the same structure filled with different information. The training phase can comprise, for each training data sample, mapping of the at least two training feature sets into the shared latent space using the untrained model thereby generating a first latent training vector for the first training feature set and a second latent vector for the second training feature set, the shared latent space having the first predefined dimensionality. The training phase can comprise, for each training data sample, generating a further latent training vector based on the first and the second latent training vectors using the untrained model. The training phase can comprise, for each training data sample, mapping the further latent training vector onto the output vector space using the untrained model thereby generating a training output of the machine learning model, the output vector space having the second predefined dimensionality. The training phase can comprise, for each training data sample, adapt the untrained machine learning model based on the generated training output and the target output to generate the trained machine learning model (e.g. by gradient descent).

The training phase can consist of finetuning a pretrained machine learning model to generate the trained machine learning model. That is, the untrained machine learning model (that is to be trained in the training phase) may be pretrained.

Within the application phase, the explanation step provides information on the contribution of feature combinations. The contribution can define a measure of an influence of the respective feature combination towards higher or lower values of the prediction output.

Generating the further latent application/training vector based on the first and the second latent application/-training vectors can comprise determining an element wise product of the first and the second latent application/training vectors to generate the further latent application/training vector.

Generating the further latent application/training vector based on the first and the second latent application/-training vectors can comprise mapping the first and the second latent application/training vectors on the further latent application/training vector using a trainable mathematical operation.

The mapping of the at least two application/training feature sets into the shared latent space can be done using one or more embedder models.

In general, a trainable mathematical operation, optionally a neural network, can be used for the mapping of the at least two application/training feature sets into the shared latent space.

Each data sample can comprise more than two feature sets. In this case, each feature set can be mapped using a trainable mathematical operation (e.g. a neural network) to a latent vector, i.e. the respective latent vector in the shared latent space. Said latent vectors can be mapped to the outcome of interest, i.e. the output, using a collection of, optionally trainable, mathematical operation built on (optionally element-wise) pairwise products between the latent vectors. Alternatively, all latent vectors can be passed through a single n-ary element-wise product operation and mapped to the outcome of interest using another, potentially trainable, mathematical operation. The explanation can be obtained by reverse-propagating in the architecture, leading to an estimate of the contribution of pairs of features or tuples (e.g. triplets) across different feature sets to a higher or lower outcome of interest.

The contribution of the respective feature combination can be obtained through outer products (or n-ary generalizations thereof) of LRP explanations, Integrated Gradients explanations or Shapley values explanations.

At least one feature set of the at least two application/training feature sets can comprise features with information characterizing a patient, optionally extracted from radiological images (such as X-ray, CT, MRI, PET scan, and/or ultrasound), pathological images, molecular data (such as mutation arrays, proteomics, methylation, sequencing data, single-cell analyses), clinical information (such as ECG, EEG and/or examination results), laboratory diagnostics and/or language (such as text data), and/or molecular targets. At least one other feature set of the at least two application/training feature sets can comprise features with information characterizing therapeutic or other interventional data, optionally extracted from a list of therapies or some other representation that may entail more (e.g. functional, biochemical, etc.) information about the therapy. The application/training output can comprise information characterizing patient outcomes such as data about patient prognosis, response to treatment, drug side effects, binding affinity of a compound with a potential molecular target.

At least one feature set of the at least two application/training feature sets can comprise features with information (e.g. molecular profiles) characterizing a biological system or entity such as about cells, and/or, viruses, and/or prions. At least one other feature set of the at least two application/training feature sets can comprise features with information characterizing perturbations, and/or agents that can interact with or alter these systems in any way (e.g. by binding to, or by destroying or altering them in any other way). The application/training output can comprise information characterizing a

measured characteristic of the perturbed system such as molecular measurements, viability assays, and/or binding properties between the agent and parts of the perturbed system.

The method can comprise identifying interactions between biological receptors and their ligands based on the determined joint contribution(s) to an outcome of interest.

The ligand candidates and receptors can be characterized based on some description (an encoding of available molecular or functional knowledge, such as structural formulas or chemical properties). The method may identify properties of ligand candidates and receptors that interact to influence the outcome(s) of interest, e.g. binding affinity etc..

The method can comprise identifying interactions between compounds and their target candidates based on the determined contribution(s).

The target candidates and the compounds can be characterized based on some description (an encoding of available molecular or functional knowledge, such as structural formulas or chemical properties). The disclosure may identify properties of the compounds and the target candidates that interact to influence the outcome(s) of interest, e.g. binding affinity, drug efficacy etc.

A data processing device comprising a processor configured to perform the above-described method can be provided.

A computer program comprising instructions which, when the program is executed by a computer, causes the computer to carry out the above-described method can be provided.

A computer-readable medium comprising instructions which, when the instructions are executed by a computer, cause the computer to carry out the above-described method can be provided.

In the following optional embodiments will be described with respect to the figures.

In the figures:

Fig. 1 schematically shows a flowchart of a first implementation of the disclosure with two feature sets,

Fig. 2 schematically shows a flowchart of a second implementation of the disclosure with more than two, here three, feature sets,

Fig. 3 schematically shows a flowchart of a third implementation of the disclosure with more than two, here three, feature sets.

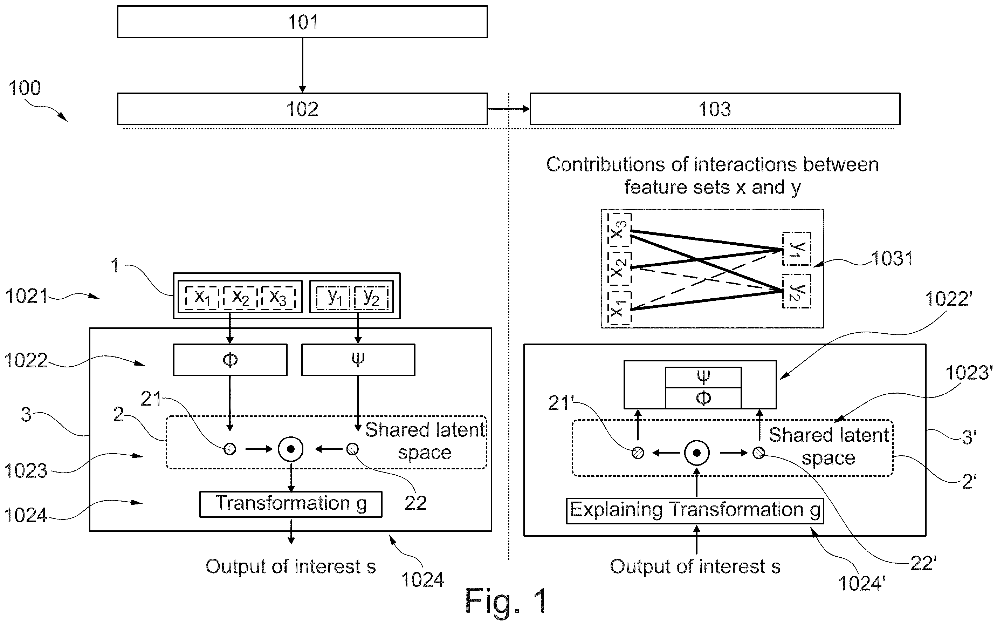

As can be gathered from figures 1 - 3, a method 100 according to the disclosure comprises a prediction step 102 (left side of figures 1 - 3) and an explanation step 103 (right side of figures 1 - 3). More specifically, the method comprises two parts or steps 102, 103 which consecutively process data in the form of a data sample 1, 1.1 to generate a prediction of an output or outcome of interest and an explanation of this prediction in the form of contributions of features and feature combinations. The data comprises features $x_i$, $y_i$, $z_i$ (i.e. descriptors for specific characteristics of each sample) that can be categorized into feature sets x, y, z.

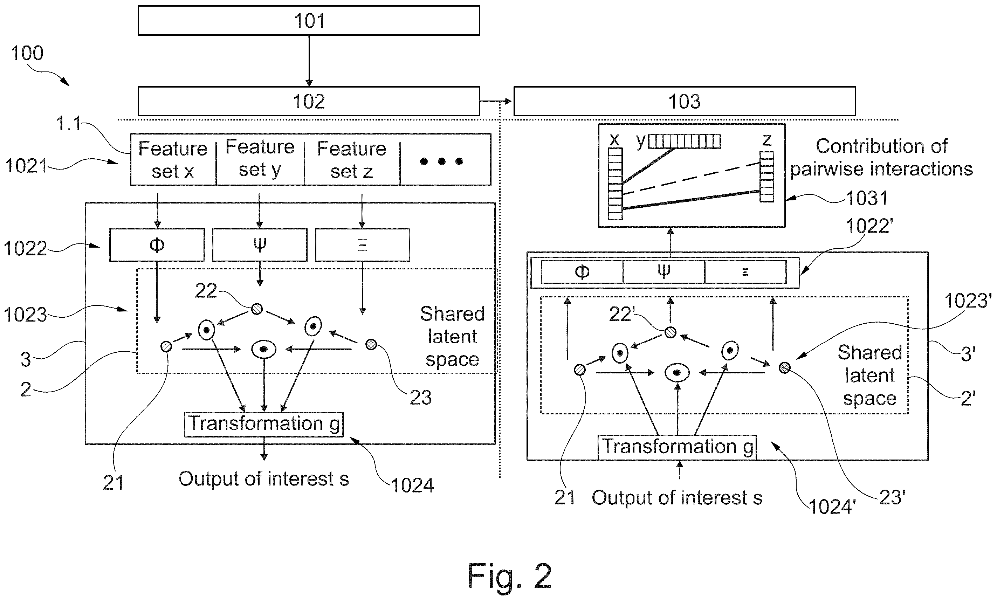

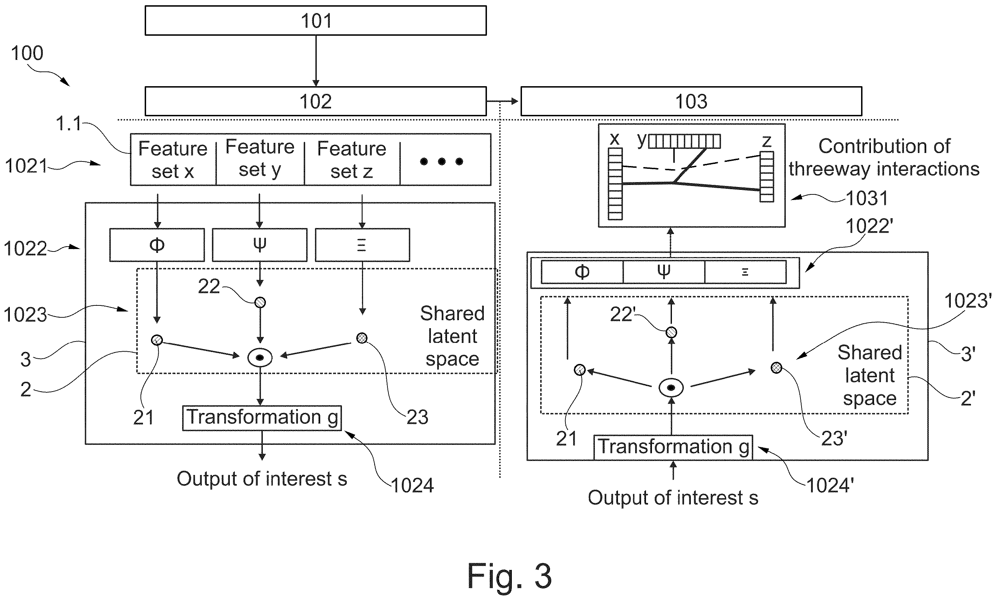

In a first sub step 1021 of the prediction step 102 an application data sample 1, 1.1 comprising at least two feature sets x, y, z is provided. According to the implementation shown in figure 1, two feature sets x, y are provided. According to the implementations shown in figures 2 and 3, three or more feature sets x, y, z are provided. The feature sets x, y, z are input into a trained machine learning model 3. The trained machine learning model 3 is used to carry out the following three sub steps 1022 - 1024. The model 3 is trained in an initial training step 101 of the method 100 (described later in detail) to fit the outcome of interest based on training data.

In a second sub step 1022 of the prediction step 102 the at least two application feature sets x, y, z are mapped into a shared latent space 2 thereby generating one latent application vector 21 - 23 per feature set x, y, z, i.e. a first latent application vector 21 for the first application feature set x, a second latent application vector 22 for the second application feature set y and, in the implementation of figures 2 and 3, a third latent application vector 23 for the third application feature set z. The shared latent space 2 has a first predefined dimensionality.

In a third sub step 1023 of the prediction step 102 the first, the second and the third latent application vectors 21 - 23, i.e. all application vectors 21 - 23, are used to generate a further latent application vector (product interaction vector).

In a fourth sub step 1024 of the prediction step 102, the further latent application vector is mapped onto an output vector space using a transformation g thereby generating an application output/output of interest s, the output vector space having a second predefined dimensionality.

More specifically, in the prediction step 102 the outcome/output of interest s is modeled based on a data sample 1, 1.1 that comprises several sets of features *x, y,* z, $\cdots$. Thus, the complete sample, with N (optionally pairwise different) features $x_i$, $y_i$, $z_i$ is split into k sets (called 'feature sets'), each with a subset of $j_k$ features. All feature sets x, y, z can have any structure, e.g. they can be vectors of arbitrary dimensions and with any topology such as images or graphs.

In the implementation shown in figure 1, in which the interaction between two sets of features *x, y* is modeled, a suitable model for predicting the outcome can be given by:

$$s = g(\Phi(x) \odot \Psi(y))$$
$$= g(\Phi_1(x)\,\Psi_1(y), \cdots, \Phi_h(x)\,\Psi_h(y)) \qquad (1)$$

where $\Phi$ and $\Psi$ are functions mapping the two feature sets to a joint h-dimensional latent space 2 (see second sub step 1022), $\odot$ denotes the element-wise product (see sub step 1023), and *g* is a "readout" function that maps the product interaction vector to the desired outcomes (see sub step 1024). One, some or all of these functions can be machine learning prediction functions such as neural networks, which can be learned from training data to map on the desired outcomes. The functions can have various structures, such as a fully-connected, convolutional, transformer, or graph neural network. It is possible that all functions are learned jointly to optimize prediction accuracy.

That is, the implementation of figure 1 applies the disclosure specifically onto pairwise interactions between two feature sets. For an arbitrary sample, the sample data 1 (structured into two feature sets x, y) is used as input to the model 3 (see sub step 1021). The two embedders $\Phi$ and $\Psi$ map the sample data 1 into the shared latent space 2 (see sub step 1022). Here, the mapped latent representations, i.e. the first and second latent application vectors 21, 22, are combined using, e.g., the element-wise product (see sub step 1023). A final transformation g is applied to map the further latent application vector to the output/outcome of interest s (see sub step 1024).

The disclosure is however not limited to two feature sets x, y, as can be gathered from figures 2 and 3.

According to the implementation of figure 2, the sample data 1.1 (structured into three or more feature sets x, y, z) is used as input to the model 3 (see sub step 1021). The three embedders $\Phi$, $\Psi$ and $\Xi$ map the data sample 1.1 into the shared latent space 2 (see sub step 1022). Here, the mapped latent representations, i.e. the first, the second and the third latent application vectors 21, 22, 23, are combined individually with each other using, e.g., the element-wise product, thereby generating three further latent vectors (see sub step 1023). A final transformation g is applied onto all three further latent vectors to map them to the output/outcome of interest s (see sub step 1024).

According to the implementation of figure 3, the sample data 1.1 (structured into three or more feature sets x, y, z) is used as input to the model 3 (see sub step 1021). The three embedders $\Phi$, $\Psi$ and $\Xi$ map the data sample 1.1 into the shared latent space 2 (see sub step 1022). Here, the mapped latent representations, i.e. the first, the second and the third latent application vectors 21, 22, 23, are combined with each other using, e.g., the element-wise product, thereby generating one further latent vector (see sub step 1023). A final transformation g is applied onto the further latent vector to map them to the output/outcome of interest s (see sub step 1024).

In other words, in the implementation shown in figure 2, in which the outcome s is modelled as the pairwise interaction between more than two sets of features x, y, z, the following alternate model 3 of outcome can be used:

$$s = g((\Phi(x) \odot \Psi(y)), (\Phi(x) \odot \Xi(z)), (\Psi(y) \odot \Xi(z))) \qquad (2)$$

where z is a third modality and $\Xi$ is the function mapping this modality to the joint latent space 2 (see sub step 1022). In this equation, the function g receives 3 product interaction vectors comprising 3*h* interaction values. The equation (2) can be extended to an increasing number of modalities by including as many product operations as there are pairs of data modalities in the equation (2). Finally, if ternary interactions should be modelled, the model of equation (2) can be extended as follows:

$$s = g(\cdots, (\Phi(x) \odot \Psi(y) \odot \Xi(z))) \qquad (3)$$

where products involving the three modalities have been added to the input of the function *g*. The equation (3) can be extended to interaction of higher-order by adding N-ary products, where N is larger than two or three.

In the following explanation step 103, the contribution of each pair (or of each triplet) of features from the available feature sets x, y, z to the application outputs of the trained machine learning model 3 is determined. Each combination of features comprises at least two features, each feature coming from a different application feature set. The contribution defines the estimated influence of the respective feature combination towards higher or lower values of the application outputs.

In analogy to the previous described prediction step 102 modelling pairwise interactions between two feature sets (Fig. 1, 102), pairwise interactions between more than two feature sets (Fig. 2, 102) and higher-order interactions between more than two feature sets (Fig. 3, 102), the explanation step estimates the contribution of feature combinations with two features coming from different feature sets (Fig. 1 and 2, 103) or the contribution of combination with more than two features each coming from a different feature set (Fig. 3, 103).

In the case of pairwise interactions between feature sets (Fig. 1 and 2), an explanation method 3' is applied to decode how pairs of features from different feature sets x, y, z interact to a higher or lower outcome of interest. The contribution is the result of the explanation method 3' in a last sub step 1031 of the explanation step 103. Here, the

transformations (g, dot-product, embedding functions Φ and Ψ) were already described with respect to the prediction step 102 and this application applies mutatis mutandis to the explanation step 103, i.e. in the prediction step 102 is the forward operation and the explanation step 103 is the corresponding backwards operation.

More specifically, an explanation method is applied to unravel how individual features from feature sets x, y (and z) interact with respect to the outcome s. In the case of two feature sets x, y (Fig. 1), such an explanation method can return a matrix E of explanations where $E_{ij}$ denotes the contribution of the ith feature from feature set x and the jth feature of feature set y to the outcome.

One method that provides a starting point for implementing step 103 is BiLRP (described in Eberle O, Büttner J, Kräutli F, Müller KR, Valleriani M, Montavon G. Building and interpreting deep similarity models. IEEE Transactions on Pattern Analysis and Machine Intelligence. 2020;44(3):1149-61.), although the latter is limited to explaining dot product similarities in embedded space. More precisely, BiLRP is a method to attribute to input features functions of the form of a dot product in embedded space, i.e.

$$s = \Phi(x)^\top \Phi(x')$$

where *x* and *x'* are two *d*-dimensional vectors from the same data modality, and $\Phi(x)$ and $\Phi(x')$ are the *h*-dimensional latent representation, and where $\Phi$ is the embedder, which can be structured as a multilayer neural network. The BiLRP conceptually proceeds by first attributing the output s in terms of feature interactions in the latent layer, then redistributing these interaction scores to the layer below using a purposely designed propagation rule, and continuing from layer to layer until the input has been reached. Such a redistribution can also be implemented as taking multiplying factors in the dot product individually, applying standard single-branch propagation rules (LRP rules as described for example in S Bach, A Binder, G Montavon, F Klauschen, KR Müller, W Samek. On Pixel-wise Explanations for Non-Linear Classifier Decisions by Layer-wise Relevance Propagation PLOS ONE, 10(7):e0130140, 2015. and G Montavon, A Binder, S Lapuschkin, W Samek, KR Müller. Layer-Wise Relevance Propagation: An Overview. in Explainable AI: Interpreting, Explaining and Visualizing Deep Learning, Springer LNCS, 11700:193-209, 2019) and recombining the resulting explanations through an outer product operation, specifically,

$$E(s) = \sum_{i=1}^{h} LRP(\Phi_i(x)) \otimes LRP(\Phi_i(x'))$$

The output is a matrix of size $d \times d$, which stores the contribution of interacting input features to the predicted similarity score s. To address a broader heterogeneity of feature maps $\Phi$ including feature maps that do not exhibit a distinct layered structure, the method can be extended by replacing the internal LRP computation by another attribution technique such as Integrated Gradients or a method based on feature occlusion such as Shapley Value Sampling.

Furthermore, whereas the BiLRP method originally applies to similarity functions, our proposed system is meant to apply to more general structures of the type $g(\Phi(x) \odot \Psi(y))$ where *x* and *y* are two input vectors of potentially different dimensionality d and *d'*, and *g* is a function that predicts not necessarily a similarity score, but more broadly any target outcome based on the interaction of *x* and *y*. In this more complex setting, the output is first backpropagated through the function *g* up to the interaction layer, e.g. using classical LRP. This results in a decomposition of the output in embedded space of the form

$$m = \{ \Phi_i(x)\, \Psi_i(y) c_i \mid i = 1 \cdots h \}.$$

These scores can be further propagated to pairs of input features via the outer product operation:

$$E(m) = \sum_{i=1}^{h} c_i\, LRP(\Phi_i(x)) \otimes LRP(\Psi_i(y))$$

resulting in an output matrix of size $d \times d'$, the elements of which correspond to the contribution of interacting features from the feature sets x and y. Here again, the internal LRP computations can be replaced by other explanation techniques such as Integrated Gradients or Shapley Value Sampling in order to address a broader range of embedder functions $\Phi$ and $\Psi$, possibly, functions not structured as a neural network.

To handle the more complex model depicted in Fig. 2 where an additional modality $z$ of dimensionality d" and embedder function $\Xi$ is considered, the attribution of the function $g$ using e.g. LRP results in an explanation in embedded space of the form

$$m = (\Phi_i(x)\,\Psi_i(y)a_i\,, \Phi_i(x)\,\Xi_i(z)b_i\,, \Psi_i(y)\,\Xi_i(z)c_i \mid i = 1 \cdots h)$$

which is composed of 3h terms, i.e. for each three possible pairs of modalities, the attribution on the h dimensions of the embedded space. Interactions across each pair of modalities can be computed as:

$$E_{xy}(m) = \sum_{i=1}^{h} a_i LRP(\Phi_i(x)) \otimes LRP(\Psi_i(y))$$

$$E_{xz}(m) = \sum_{i=1}^{h} b_i LRP(\Phi_i(x)) \otimes LRP(\Xi_i(z))$$

$$E_{yz}(m) = \sum_{i=1}^{h} c_i LRP(\Psi_i(y)) \otimes LRP(\Xi_i(z))$$

It consists of three matrices of dimensions $d \times d'$, $d \times d''$, and $d' \times d''$, respectively, and stores the contribution of pairwise features across the different feature sets x, y, z. These scores hold important information about how features from different feature sets x, y, z interact toward the outcome of interest s.

The explanation technique can be further extended to handle three-way interactions or interactions of higher-order, in particular, models with the structure of Fig. 3. Specifically, applying LRP in the readout function yields a decomposition of the output of the form

$$m = \{\cdots, \Phi_i(x)\,\Psi_i(y)\Xi_i(z)\,q_i \mid i = 1 \cdots h\}$$

The three-way products can be collected into an explanation of the form

$$E_{xyz}(m) = \sum_{i=1}^{h} q_i LRP(\Phi_i(x)) \otimes LRP(\Psi_i(y)) \otimes LRP(\Xi_i(z))$$

where the operation $(\cdot) \otimes (\cdot) \otimes (\cdot)$ is a generalized outer product that results in an array of size $d \times d' \times d''$ containing the contribution of triplet of features from the modalities *x, y, z*, respectively.

To summarize, the explanation step 103 identifies how features x, y, z from different feature sets x, y, z contribute together toward the outcome of interest s. Dashes lines and thick lines between features $x_1$, $x_2$, $x_3$, $y_1$, $y_2$ schematically visualize the contribution of feature combinations to a higher or a lower outcome s, respectively (see step 1031). Only some feature interactions are shown in figures 2 and 3 but contributions of all pair-wise (Fig. 2) or three-way (Fig. 3) feature combinations (each feature coming from a different feature set x, y, z) can be computed.

In the following, the training phase 101 of the method 100 will be described, which is carried out before the application phase comprising the prediction step 102 and the explanation step 103. The method can comprise a training phase for generating the trained machine learning model. The training phase can comprise providing training data samples, each data sample comprising at least two training feature sets and a training target output. The feature sets can be provided as input for the untrained machine learning model. The application feature sets and the training feature sets comprising information describing the same features. The training phase can comprise, for each training data sample, mapping of the at least two training feature sets into the shared latent space using the untrained model thereby generating a first latent training vector for the first training feature set and a second latent vector for the second training feature set, the shared latent space having the first predefined dimensionality. The training phase can comprise, for each training data

sample, generating a further latent training vector based on the first and the second latent training vectors using the untrained model. The training phase can comprise, for each training data sample, mapping the further latent training vector onto the output vector space using the untrained model thereby generating a training output of the machine learning model, the output vector space having the second predefined dimensionality.

The training phase can comprise, for each training data sample, adapt the untrained machine learning model based on the generated training output and the provided target output to generate the trained machine learning model (e.g. using gradient descent).

## Claims

**1.** Computer-implemented method, wherein the method comprises:

- a prediction step (102), the prediction step (102) comprising:

  - providing an application data sample comprising at least two application feature sets as input to a trained machine learning model,
  - mapping of the at least two application feature sets into a shared latent space using the trained machine learning model thereby generating a first latent application vector for the first application feature set and a second latent prediction vector for the second application feature set, the shared latent space having a first predefined dimensionality,
  - generating a further latent application vector using the trained machine learning model based on the first and the second latent application vectors,
  - mapping the further latent application vector onto an output vector space using the trained machine learning model thereby generating a application output, the output vector space having a second predefined dimensionality,

- an explanation step (103), the explanation step (103) comprising:

  - determining a contribution of, optionally pairwise or higher-order, combinations of features between the at least two application feature sets to the application output of the trained machine learning model, each combination of features comprising at least one feature of the first application feature set and at least one feature of the second application feature set.

**2.** Computer-implemented method according to claim 1, wherein the method comprises:

- a training step (101) for generating the trained machine learning model, the training step comprising:

  - providing training data samples, each data sample comprising at least two training feature sets and a training target output, the application feature sets and the training feature sets comprising information describing the same features,
  - for each training data sample, mapping of the at least two training feature sets into the shared latent space using an untrained machine learning model thereby generating a first latent training vector for the first training feature set and a second latent vector for the second training feature set, the shared latent space having the first predefined dimensionality,
  - for each training data sample, generating a third latent training vector using the untrained machine learning model based on the first and the second latent training vectors,
  - for each training data sample, mapping the third latent training vector onto the output vector space using the untrained machine learning model thereby generating a training output of the untrained machine learning model, the output vector space having the second predefined dimensionality,
  - for each training data sample, adapt the untrained machine learning model based on the generated training output and the target output to generate the trained machine learning model.

**3.** Computer-implemented method according to claim 2, wherein the untrained machine learning model is a pretrained machine learning model and the training step (101) consists in finetuning the pretrained machine learning model to generate the trained machine learning model.

**4.** Computer-implemented method according to any of claims 1 to 3, wherein the contribution defines an influence of the

respective feature combination towards higher or lower values of the application output.

5. Computer-implemented method according to any of claims 1 to 4, wherein generating the further latent application/-training vector based on the first and the second latent application/training vectors comprises:

   - determining an element wise product of the first and the second latent application/training vectors to generate the third latent application/training vector, or
   - mapping the first and the second latent application/training vectors on the third latent application/training vector using a trainable mathematical operation.

6. Computer-implemented method according to any of claims 1 to 5, wherein an embedder model, optionally a trainable mathematical operation, further optionally a neural network, is used for the mapping of the at least two application/-training feature sets into the shared latent space.

7. Computer-implemented method according to any of claims 1 to 6, wherein the contribution of the respective feature combination is obtained through outer products of LRP explanations or Integrated Gradients explanations or Shapley values explanations.

8. Computer-implemented method according to any of claims 1 to 7, wherein:

   - at least one feature set of the at least two application/training feature sets comprises features with information characterizing a patient, optionally extracted from radiological images, pathological images, molecular data (such as mutation arrays, proteomics, methylation, sequencing data, single-cell analyses), clinical information, laboratory diagnostics and/or language, and/or molecular targets,
   - at least one other feature set of the at least two application/training feature sets comprises features with information characterizing therapeutic or other interventional data, optionally extracted from a list of therapies or some other representation that may entail more information about the therapy, and/or
   - the application/training output comprises information characterizing patient outcomes such as data about patient prognosis, response to treatment, drug side effects, binding affinity of a compound with a potential molecular target.

9. Computer-implemented method according to any of claims 1 to 7, wherein:

   - at least one feature set of the at least two application/training feature sets comprises features with information characterizing a biological system or entity such as about cells I, and/or, viruses, and/or prions,
   - at least one other feature set of the at least two application/training feature sets comprises features with information characterizing perturbations, and/or agents that can interact with or alter these systems in any way, and
   - the application/training output comprises information characterizing a measured characteristic of the perturbed system such as molecular measurements, viability assays, and/or binding properties between the agent and parts of the perturbed system.

10. Computer-implemented method according to any of claims 1 to 9, wherein the method comprises:

    - identifying of interactions between biological receptors and their ligands based on the determined contribution(s).

11. Computer-implemented method according to any of claims 1 to 9, wherein the method comprises:

    - identifying of interactions compounds and their target candidates based on the determined contribution(s).

12. A data processing device comprising a processor configured to perform the method according to any of claims 1 to 11.

13. A computer program comprising instructions which, when the program is executed by a computer, cause the computer to carry out the method according to any of claims 1 to 11.

14. A computer-readable medium comprising instructions which, when the instructions are executed by a computer, cause the computer to carry out the method according to any of claims 1 to 11.

101
100
102
103
Contributions of interactions between feature sets x and y
$x_3$
$x_2$
$x_1$
$y_1$
$y_2$
1031
1
1021
$x_1$
$x_2$
$x_3$
$y_1$
$y_2$
1022
Φ
Ψ
1022'
Ψ
Φ
1023'
21
2
3
Shared latent space
1023
22
Transformation g
1024
Output of interest s
1024
21'
Shared latent space
3'
2'
Explaining Transformation g
Output of interest s
22'
1024'

Fig. 1

100
101
102
103
1.1
1021
Feature set x
Feature set y
Feature set z
1022
Φ
Ψ
Ξ
1023
3
2
Shared latent space
21
22
23
1024
Transformation g
Output of interest s
Contribution of pairwise interactions
1031
x
y
z
1022'
1023'
3'
2'
Shared latent space
23'
1024'
22'
21
Transformation g
Output of interest s

Fig. 2

100
101
102
103
1.1
1021
Feature set x
Feature set y
Feature set z
• • •
1022
Φ
Ψ
Ξ
22
1023
3
2
21
23
Shared latent space
Transformation g
Output of interest s
1024
x
y
z
Contribution of threeway interactions
1031
1022'
Φ
Ψ
Ξ
22'
1023'
Shared latent space
3'
2'
21
23'
Transformation g
1024'
Output of interest s

Fig. 3

Europäisches
Patentamt
European
Patent Office
Office européen
des brevets

# EUROPEAN SEARCH REPORT

Application Number
EP 25 16 2429

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X | US 2023/109108 A1 (BANERJEE TATHAGATA [US] ET AL) 6 April 2023 (2023-04-06)<br>* paragraphs [0008], [0047], [0058], [0155] - [0163], [0287] - [0289], [0313], [0619] *<br>----- | 1-14 | INV.<br>G06N3/09<br>G06N5/045 |
| | | | TECHNICAL FIELDS SEARCHED (IPC) |
| | | | G06N |

The present search report has been drawn up for all claims

1

| Place of search | Date of completion of the search | Examiner |
|---|---|---|
| The Hague | 23 July 2025 | Bykowski, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 16 2429

This annex lists the patent family members relating to the patent documents cited in the above-mentioned European search report. The members are as contained in the European Patent Office EDP file on The European Patent Office is in no way liable for these particulars which are merely given for the purpose of information.

23-07-2025

| Patent document cited in search report | Publication date | Patent family member(s) | Publication date |
|---|---|---|---|
| US 2023109108 A1 | 06-04-2023 | EP 4413498 A1 | 14-08-2024 |
| | | EP 4413499 A1 | 14-08-2024 |
| | | EP 4413500 A1 | 14-08-2024 |
| | | US 2023104158 A1 | 06-04-2023 |
| | | US 2023105659 A1 | 06-04-2023 |
| | | US 2023107415 A1 | 06-04-2023 |
| | | US 2023109108 A1 | 06-04-2023 |
| | | US 2023260634 A1 | 17-08-2023 |
| | | US 2023343446 A1 | 26-10-2023 |
| | | US 2024021298 A1 | 18-01-2024 |
| | | US 2024136058 A1 | 25-04-2024 |
| | | WO 2023059742 A1 | 13-04-2023 |
| | | WO 2023059743 A1 | 13-04-2023 |
| | | WO 2023059744 A1 | 13-04-2023 |
| | | WO 2023059746 A1 | 13-04-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **KEYL, J.** ; **KEYL, P.** ; **MONTAVON, G. et al.** Decoding pan-cancer treatment outcomes using multimodal real-world data and explainable artificial intelligence. *Nat Cancer*, 2025, https://doi.org/10.1038/s43018-024-00891-1
- **EBERLE O** ; **BÜTTNER J** ; **KRÄUTLI F** ; **MÜLLER KR** ; **VALLERIANI M** ; **MONTAVON G**. Building and interpreting deep similarity models. *IEEE Transactions on Pattern Analysis and Machine Intelligence*, 2020, vol. 44 (3), 1149-61
- **S BACH** ; **A BINDER** ; **G MONTAVON** ; **F KLAUSCHEN** ; **KR MÜLLER** ; **W SAMEK**. On Pixel-wise Explanations for Non-Linear Classifier Decisions by Layer-wise Relevance Propagation. *PLOS ONE*, 2015, vol. 10 (7), e0130140
- **G MONTAVON** ; **A BINDER** ; **S LAPUSCHKIN** ; **W SAMEK** ; **KR MÜLLER**. Layer-Wise Relevance Propagation: An Overview. in Explainable AI: Interpreting, Explaining and Visualizing Deep Learning. *Springer LNCS*, 2019, vol. 11700, 193-209